# EUROPÄISCHE PATENTSCHRIFT

(11) **EP 1 591 597 B1**
(45) Veröffentlichungstag und Bekanntmachung des Hinweises auf die Patenterteilung: **21.01.2009**
(21) Anmeldenummer: 05007290.9
(22) Anmeldetag: 04.04.2005
(51) Int. Cl.: E04B 2/74, E04C 1/39, F16L 5/04, F16L 5/00

(54) **Gipskartonständerwand**
Wall of gypsum wallboard and studs
Cloison avec panneaux de plâtre et montants

(30) Priorität: 08.04.2004 DE 102004018119
(43) Veröffentlichungstag der Anmeldung: 02.11.2005
(73) Patentinhaber: Reuter, Martin, 63584 Gruendau (DE)
(72) Erfinder: Reuter, Martin, 63584 Gruendau (DE)
(74) Vertreter: Wolf, Günter

(56) Entgegenhaltungen:
- WO-A-00/52278
- WO-A-89/02015
- WO-A-97/30243
- DE-A1- 19 905 103
- DE-U1- 9 419 570
- SE-C2- 509 458
- US-A- 4 419 535

## Beschreibung

Die Erfindung betrifft eine Gipskartonständerwand gemäß dem Oberbegriff des Patentanspruchs 1.

Gipskartonständerwände sind an sich hinlänglich bekannt. Beispielsweise wird auf die DE 100 09 601 A1 verwiesen, in der ein einteiliges Handwerkzeug zum Durchstossen von zu Gipskartonständerwänden aufgebauten Gipskartonplatten beschrieben ist.

Prinzipiell bestehen Gipskartonständerwände einerseits aus einem regelmäßig aus Blechprofilen gebildeten Tragrahmen, der vor Ort, an die jeweiligen Räumlichkeiten angepaßt, aufgebaut wird (siehe hierzu auch den den Anmeldungsunterlagen beigefügten Internetauszug, der zumindest zum Anmeldezeitpunkt unter http://www.selbst.de/fstart.php4?inhaltURL=http://www.sel bst.de/2archiv/special_archiv/innenausbau/leichte_trennwand/ar beitsschritte.php4 abrufbar war).

Derartige Gipskartonständerwände werden, wie im obigen Auszug beschrieben, hauptsächlich als leichte Trennwände zur Einteilung eines großen Raumes in zwei oder mehrere kleinere Räume eingesetzt und können, was ein weiterer Vorteil neben der leichten Montage ist, auch leicht wieder abgebaut werden.

Da derartige Gipskartonständerwände darüber hinaus bei entsprechend starker (beispielsweise doppellagiger) Beplankung sogar bandschutztechnischen Bestimmungen genügen, sind diese Trennwände prinzipiell auch als sogenannte Schachtwände einsetzbar; derartige Schachtwände werden beispielsweise dort als Abschottung gegenüber einzelnen Räumen eines Stockwerks vorgesehen, wo Kabel und Rohre in einem Schacht durch mehrere Etagen eines Gebäudes verlegt sind.

Diese Konstruktion wird brandschutztechnisch dann problematisch, wenn Kabel und Rohre zur Versorgung einer Etage durch die Gipskartonständerwand hindurch geführt werden müssen, denn die Brandschutznormen setzen für den Fall einer Hindurchführung von Kabeln und Rohren durch Wände ganz bestimmte technische Maßgaben voraus, da sich ein Brand gerade über Kabel und Rohre ohne weitere Schutzmaßnahmen sehr schnell von einem Raum zum anderen bzw. von einer Etage zur anderen ausbreitet.

Der Erfindung liegt dementsprechend die Aufgabe zugrunde, eine Gipskartonständerwand der eingangs genannten Art auf möglichst einfache Weise dahingehend weiter zu bilden, dass diese auch bei Hindurchführung von Kabeln und/oder Rohren den vorgegebenen und einzuhaltenden Brandschutznormen genügt.

Diese Aufgabe ist mit einer Gipskartonständerwand der eingangs genannten Art durch die im Kennzeichen des Patentanspruchs 1 aufgeführten Merkmale gelöst.

Nach der Erfindung ist also vorgesehen, dass im Öffnungsbereich zur Durchführung von Kabeln und Rohren ein wandförmiges, aus Poren-, Gas- oder Schaumbeton bestehendes Massivwandelement angeordnet ist, an dem für die hindurchzuführenden Kabel und Rohre nachträglich einbringbare Durchgangsöffnungen vorsehbar sind. Mit anderen Worten ausgedrückt, besteht somit die erfindungsgemäße Lösung darin, ein brandschutztechnisch ohne weiteres für die Durchführung von Kabeln und Rohren zulässiges Bauelement in eine beim Aufbau freigelassene oder nachträglich eingebrachte Öffnung einzusetzen, und somit gewissermaßen an der Stelle des Kabel- und Rohrdurchgangs Bedingungen zu schaffen, wie sie sonst an einer ohne weiteres den Brandschutznormen genügenden Massivwand herrschen. Ein weiterer Vorteil der Erfindung besteht darin, dass das Massivwandelement im Bedarfsfall als Revisionsöffnung genutzt werden kann.

Andere vorteilhafte Weiterbildungen ergeben sich aus den abhängigen Ansprüchen.

Der Vollständigkeit halber wird noch auf die WO 00/52278 A1 hingewiesen, bei der aber kein Massivwandelement, sondern Mineralwolle zum Verschließen des Öffnungsbereichs bzw. Umschießen der Rohre dient.

Schließlich ist aus der WO 89/02015 A1 eine metallische Rahmenkonstruktion bekannt, bei der metallische Rohre zur Durchführung von Kabeln und Leitungen in Beton oder auch Leichtbeton mit der Rahmenkonstruktion vergossen sind.

Die erfindungsgemäße Gipskartonständerwand einschließlich ihrer vorteilhaften Weiterbildungen gemäß der abhängigen Ansprüche wird nachfolgend anhand der zeichnerischen Darstellung verschiedener Ausführungsbeispiele näher erläutert.

Es zeigt
- Figur 1: im Schnitt ein Gebäude mit einem Schacht für Kabel und Rohre und pro Etage mit einer erfindungsgemäßen Schachtwand bzw. Gipskartonständerwand;
- Figur 2: perspektivisch die Gipskartonständerwand teilweise montiert mit dem erfindungsgemäßen Massivwandelement;
- Figur 3: im Schnitt von oben die einseitig beplankte Gipskartonständerwand mit dem von Kabeln und Rohren durchgriffenen, erfindungsgemäßen Massivwandelement;
- Figur 4: ebenfalls im Schnitt von oben in vergrößerter Darstellung eine Befestigungsmöglichkeit des Massivwandelements an der Gipskartonständerwand; und
- Figur 5: in Vorderansicht das erfindungsgemäße Massivwand-element in zweiteiliger Ausführungsform mit beidseitig vorgesehenen Befestigungselementen.

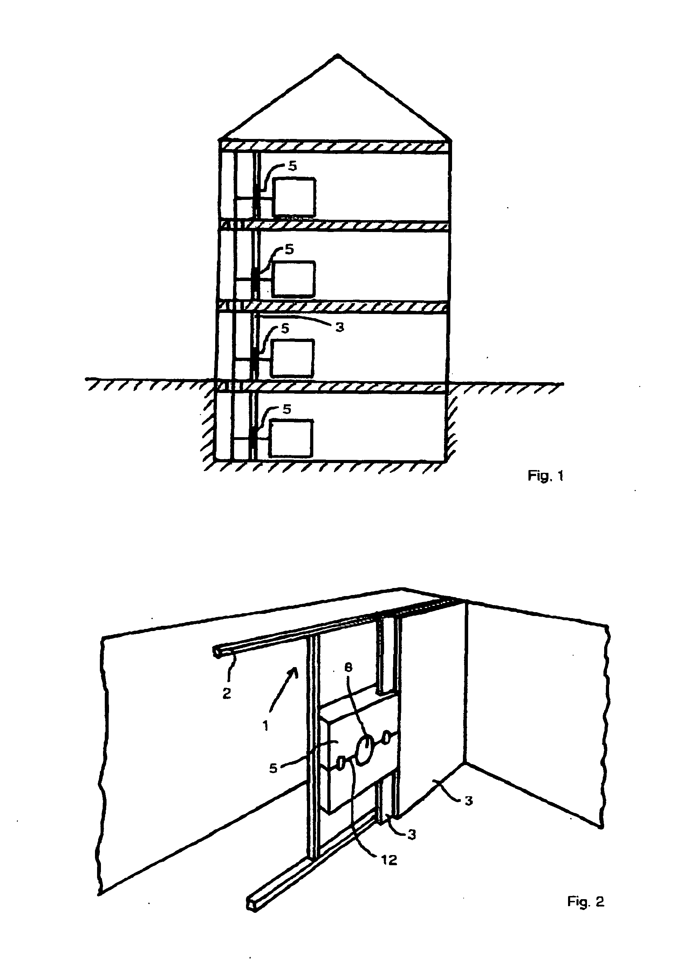

Die in den Figuren 1 bis 5 dargestellte Gipskartonständerwand besteht grundsätzlich aus einem mindestens einseitig mit Gipskartonplatten 3 beplankten und aus Rahmenprofilen 2 gebildeten Traggestell 1, wobei die Gipskartonplatten 3 einen Öffnungsbereich 4 begrenzen. Die Maßgabe "mindestens einseitig beplankt" ergibt sich beim vorgesehenen Einsatzzweck der erfindungsgemäßen Gipskartonständerwand daraus, dass es bei Schachtwänden regelmäßig recht schwierig, wenn nicht sogar unmöglich ist, das Traggestell 1 auch schachtseitig mit Gipskartonplatten 3 zu beplanken. Sollte dies aufgrund der örtlichen Gegebenheiten möglich sein, so bringt die obige Maßgabe zum Ausdruck, dass auch derartige, beidseitig beplankte Gipskartonständerwände Gegenstand der Erfindung sind.

Nach der Erfindung ist nun wesentlich, dass im Öffnungsbereich 4 zur Durchführung von Kabeln und Rohren ein wandförmiges, aus Poren-, Gas- oder Schaumbeton bestehendes Massivwandelement 5 angeordnet ist, an dem für die hindurchzuführenden Kabel und Rohre nachträglich einbringbare Durchgangsöffnungen (6) vorgesehen sind.

Wie vorab erwähnt, würde eine einfache Durchbrechung der Gipskartonplatten zur Durchführung von Kabeln und Rohren nicht den Brandschutznormen entsprechen, d. h. erst der Einsatz des erfindungsgemäßen, in den Öffnungsbereich 4 eingesetzten Massivwandelements ermöglich überhaupt die Ausbildung einer Gipskartonständerwand mit Kabel- und Rohrdurchführungen im Rahmen der brandschutztechnischen Normen. Das Massivwandelement, das aus sogenanntem Poren-, Gas- oder auch Schaumbeton besteht, ist vergleichsweise leicht, läßt sich leicht bearbeiten und ist aufgrund seiner wandartigen Ausbildung im Prinzip wie eine Massivwand zu bewerten, die den Brandschutznormen für Kabel- und Rohrdurchführungen für Massivwände entsprechen muss.

Am Massivwandelement 5 sind für die hindurchzuführenden Kabel und Rohre Durchgangsöffnungen 6 vorgesehen, die unterschiedliche Durchmesser für verschieden dicke Kabel und Rohre aufweisen. Diese Durchgangsöffnungen 6 können wahlweise bereits bei der Fertigung in das Massivwandelement 5 eingebracht worden sein oder auch erst nach der Montage vor Ort. Im letzten Fall ist das Massivwandelement 5 zunächst als durchgangsöffnungsfreier vollkörper ausgebildet, in den dann auf der Baustelle mit einem entsprechend geeigneten Werkzeug passende Durchgangsöffnungen 6 eingebracht werden. Da vor allem Porenbeton ein einfach zu bearbeitendes Material ist, ist der dabei erforderliche Aufwand vor Ort relativ gering.

Um ohne weiteres (beispielsweise mit einem Bohrer) Durchgangsöffnungen 6 in das Massivwandelement 5 einbringen zu können, ist weiterhin vorgesehen, dass dieses jedenfalls im wesentlichen armierungsfrei ausgebildet ist, d. h. jedenfalls dort wo Durchgangsöffnungen 6 vorgesehen sind, ist im Massivwandelement 5 keine stabilisierende Armierung angeordnet.

Um einen Flammendurchtritt durch die Durchgangsöffnung 6 im Brandfall zu verhindern, ist vorteilhaft in jeder Durchgangsöffnung 6 ein im Brandfall aufschäumendes Material, vorzugsweise Blähgraphit, angeordnet (nicht dargestellt, da ohne weiteres vorstellbar). Alternativ können auch sonstige, bekannte Schutzsysteme wie beispielsweise Brandschutzmanschetten vorgesehen sein.

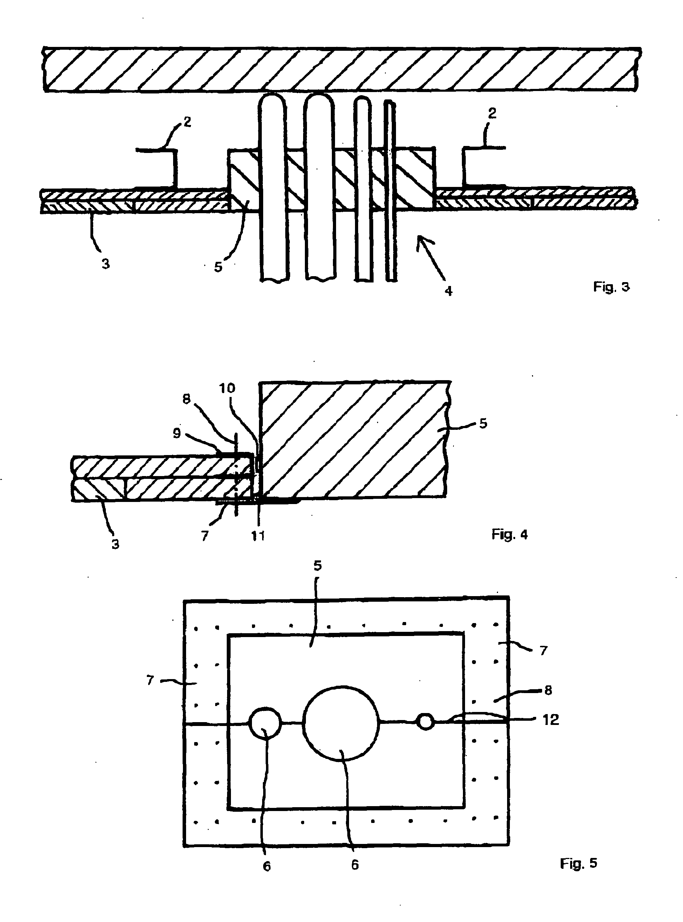

Eine besonders bevorzugte Ausführungsform des Massivwandelements 5 ergibt sich (siehe hierzu insbesondere die Figuren 2 und 5), wenn das Massivwandelement 5 mehrteilig, oder wie dargestellt, zweiteilig ausgebildet ist. In diesem Fall ist es möglich, dass die Durchgangsöffnungen 6 in einer verbindungsebene 12 (siehe Figur 5) zwischen zwei Teilen des Massivwandelements 5 angeordnet sind und sich somit die Kabel und Rohre bei der Montage der Gipskartonständerwand besonders einfach verlegen lassen. Die Verbindungsebene 12 teilt dabei vorzugsweise jede Durchgangsöffnung 6 in zwei gleiche, zueinander passend Teilöffnungen auf.

Einerseits aus optischen Gründen, aber auch um die sichtseitige Fläche der Gipskartonständerwand einfach weiterbearbeiten (beispielsweise tapezieren) zu können, ist ferner vorteilhaft vorgesehen, dass das Massivwandelement 5 sichtseitig bündig, eine ebene Fläche mit den Gipskartonplatten 3 bildend abschließt, d. h. nach erfolgter Montage ist - von der Vorderseite der Gipskartonständerwand aus betrachtet - kaum zu erkennen, dass an der Stelle der Kabel- und Rohrdurchführungen nicht einfach eine Gipskartonplatte 3, sondern das erfindungsgemäße, die Brandschutznormen erfüllende Massivwandelement 5 angeordnet ist.

Um im Brandfall einen sicheren Abschluss zwischen dem Massivwandelement 5 und den Gipskartonplatten 3 zu gewährleisten, ist vorteilhaft vorgesehen, dass in dem vorhandenen Spalt ein im Brandfall aufschäumendes Material, vorzugsweise Blähgraphit 10, angeordnet ist (siehe hierzu insbesondere Figur 4). Darüber hinaus ist u. a. aus optischen Grüden zwischen dem Massivwandelement 5 und den Gipskartonplatten 3 eine abdichtendes Material, vorzugsweise Gips 11 oder Silikon, angeordnet.

Versuche haben ergeben, dass die Brandschutznormen dann ohne weiteres erfüllt werden, wenn das Massivwandelement 5 eine Dicke von etwa 75 bis 200 mm aufweist. Darüber hinaus ist zur Einhaltung der Brandschutzvorschriften vorgesehen, dass von jeder Durchgangsöffnung 6 bis zum Rand des Massivwandelements 5 mindestens ein Abstand von etwa 50 bis 100 mm besteht.

Eine Befestigungsmöglichkeit (nicht dargestellt) für das Massivwandelement 5 besteht darin, dieses an den Rahmenprofilen 2 des Traggestells 1 zu befestigen. Alternativ ist aber auch eine Befestigung direkt an den Gipskartonplatten 3 möglich. Diesbezüglich wird auf Figur 4 verwiesen. Wie ersichtlich ist dort am Massivwandelement 5 mindestens ein Befestigungselement 7, vorzugsweise ein ebenes Blech, vorgesehen, das mittels Schrauben 8 (gestrichelt dargestellt) an einem den Gipskartonplattenrand umfassenden Clipp 9 befestigt ist. Figur 5 zeigt, dass ein solches Befestigungselement 7 beispielsweise rahmenartig um das Massivwandelement 5 herum angeordnet sein kann.

Bezüglich der Gipskartonständerwand ist in an sich bekannter Weise, und wie in den Figuren 2, 3 und 4 dargestellt, vorteilhaft vorgesehen, dass mehrere Schichten, vorzugsweise zwei, Gipskartonplatten 3 mit Versatz zueinander am Traggestell 1 angeordnet sind. Darüber hinaus sind die Rahmenprofile 2 vorzugsweise aus im Querschnitt C-förmigen, verzinkten Blechen gebildet. Schließlich ist, wie in Figur 2 verdeutlicht, vorteilhaft vorgesehen, dass das Traggestell 1 aus an Boden und Decke horizontal und dazwischen aus mehreren senkrecht verlaufenden und mit Abstand zueinander angeordneten Rahmenprofilen 2 gebildet ist.

### Bezugszeichenliste

- 1: Traggestell
- 2: Rahmenprofil
- 3: Gipskartonplatte
- 4: öffnungsbereich
- 5: Massivwandelement
- 6: Durchgangsöffnung
- 7: Befestigungselement
- 8: Schraube
- 9: Clipp
- 10: Blähgraphit
- 11: Gips
- 12: verbindungsebene

## Patentansprüche

1. Gipskartonständerwand, umfassend ein mindestens einseitig mit Gipskartonplatten (3) beplanktes, aus Rahmenprofilen (2) gebildetes Traggestell (1), wobei die Gipskartonplatten (3) einen Öffnungsbereich (4) begrenzen,
**dadurch gekennzeichnet,**
**dass** im öffnungsbereich (4) zur Durchführung von Kabeln und Rohren ein wandförmiges aus Poren-, Gas- oder Schaumbeton bestehendes Massivwandelement (5) angeordnet ist, an dem für die hindurchzuführenden Kabel und Rohrenachträglich einbringbare Durchgangsöffnungen (6) vorsehbar sind

2. Gipskartonständerwand nach Anspruch 1,
**dadurch gekennzeichnet,**
**dass** in jeder Durchgangsöffnung (6) ein im Brandfall aufschäumendes Material, vorzugsweise Blähgraphit, angeordnet ist, wobei vorzugsweise das Massivwandelement (5) sichtseitig bündig, eine ebene Fläche mit den Gipskartonplatten (3) bildend abschließt.

3. Gipskartonständerwand nach Anspruch 1,
**dadurch gekennzeichnet,**
**dass** das Massivwandelement (5) bei der Montage vor Ort zunächst als durchgangsöffnungsfreier Vollkörper ausgebildet ist, wobei vorzugsweise in jeder Durchgangsöffnung (6) ein im Brandfall aufschäumendes Material, vorzugsweise Blähgraphit, angeordnet ist, wobei vorzugsweise das Massivwandelement (5) sichtseitig bündig, eine ebene Fläche mit den Gipskartonplatten (3) bildend abschließt.

4. Gipskartonständerwand nach einem der Ansprüche 1 bis 3,
**dadurch gekennzeichnet,**
**dass** das Massivwandelement (5) mehrteilig, vorzugsweise zweiteilig, ausgebildet ist, wobei vorzugsweise die Durchgangsöffnungen (6) in einer Verbindungsebene (12) zwischen zwei Teilen des Massivwandelements (5) angeordnet sind.

5. Gipskartonständerwand nach einem der Ansprüche 1 bis 4,
**dadurch gekennzeichnet,**
**dass** zwischen dem Massivwandelement (5) und den Gipskartonplatten (3) ein im Brandfall aufschäumendes Material, vorzugsweise Blähgraphit (10), und/oder ein abdichtendes Material, vorzugsweise Gips (11) oder Silikon, angeordnet ist

6. Gipskartonständerwand nach einem der Ansprüche 1 bis 5,
**dadurch gekennzeichnet,**
**dass** das Massivwandelement (5) eine Dicke von etwa 75 bis 200 mm aufweist, wobei vorzugsweise von jeder Durchgangsöffnung (6) bis zum Rand des Massivwandelements (5) mindestens ein Abstand von etwa 50 bis 100 mm besteht, wobei vorzugsweise die Durchgangsöffnungen (6) unterschiedliche Durchmesser für verschieden dicke Kabel und Rohre aufweisen, wobei vorzugsweise das Massivwandelement (5) an den Rahmenprofilen (2) befestigt ist.

7. Gipskartonständerwand nach einem der Ansprüche 1 bis 6,
**dadurch gekennzeichnet,**
**dass** das Massivwandelement (5) an den Gipskartonplatten (3) befestigt ist, wobei vorzugsweise am Massivwandelement (5) mindestens ein Befestigungselement (7), vorzugsweise ein ebenes Blech, vorgesehen ist, das mittels Schrauben (8) an einem den Gipskartonplattenrand umfassenden Clipp (9) befestigt ist.

8. Gipskartonständerwand nach einem der Ansprüche 1 bis 7,
**dadurch gekennzeichnet,**
**dass** mehrere Schichten, vorzugsweise zwei, Gipskartonplatten (3) mit Versatz zueinander am Traggestell (1) angeordnet sind.

9. Gipskartonständerwand nach einem der Ansprüche 1 bis 8,
**dadurch gekennzeichnet,**
**dass** das Traggestell (1) aus an Boden und Decke horizontal und dazwischen aus mehreren senkrecht verlaufenden und mit Abstand zueinander angeordneten Rahmenprofilen (2) gebildet ist, wobei vorzugsweise die Rahmenprofile (2) aus im Querschnitt C-förmigen, verzinkten Blechen gebildet sind.

10. Gipskartonständerwand nach einem der Ansprüche 1 bis 9,
**dadurch gekennzeichnet,**
**dass** das Massivwandelement (5) wahlweise als Revisionsöffnung ausgebildet ist.

## Claims

1. A plasterboard stud wall, comprising a supporting frame (1) formed from frame profiles (2), clad at least on one side with plasterboard panels (3), wherein the plasterboard panels (3) delimit an opening region (4),
**characterised in**
**that** a wall-shaped solid wall element (5) consisting of porous, aerated or foamed concrete is arranged in the opening area (4) for the passage of cables and pipes, at which solid wall element through openings (6) which can be incorporated subsequently, can be provided for the cables and pipes to be passed therethrough.

2. The plasterboard stud wall according to claim 1,
**characterised in**
**that** a material which foams in the event of fire, preferably expanded graphite, is arranged in each through opening (6), wherein the solid wall element (5) preferably ends flush on the visible side, forming a flat surface with the plasterboard panels (3).

3. The plasterboard stud wall according to claim 1,
**characterised in**
**that** the solid wall element (5) is initially configured during assembly on site as a solid body free from through openings, wherein a material which foams in the event of fire, preferably expanded graphite, is arranged in each through opening (6), wherein the solid wall element (5) preferably ends flush on the visible side, forming a flat surface with the plasterboard panels (3).

4. The plasterboard stud wall according to any one of claims 1 to 3,
**characterised in**
**that** the solid wall element (5) is formed in many parts, preferably in two parts, wherein the through openings (6) are preferably arranged in a connecting plane (12) between two parts of the solid element (5).

5. The plasterboard stud wall according to any one of claims 1 to 4,
**characterised in**
**that** a material which foams in the event of fire, preferably expanded graphite (10) and/or a sealing material, preferably plaster (11) or silicone, is arranged between the solid wall element (5) and the plasterboard panels (3).

6. The plasterboard stud wall according to any one of claims 1 to 5,
**characterised in**
**that** the solid wall element (5) has a thickness of about 75 to 200 mm, wherein at least a distance of about 50 to 100 mm preferably exists between each through opening (6) and the edge of the solid wall element (5), wherein the through openings (6) preferably have different diameters for cables and pipes of different thickness, wherein the solid wall element (5) is fastened to the frame profiles (2).

7. The plasterboard stud wall according to any one of claims 1 to 6,
**characterised in**
**that** the solid wall element (5) is fastened to the plasterboard panels (3), wherein preferably at least one fastening element (7), preferably a flat metal sheet, is provided on the solid wall element (5), said fastening element being fastened by means of screws (8) on a clip (9) surrounding the edge of the plasterboard panel.

8. The plasterboard stud wall according to any one of claims 1 to 7,
**characterised in**
**that** a plurality of layers, preferably two, plasterboard panels (3) are arranged on the supporting frame (1) in a manner offset with respect to one another.

9. The plasterboard stud wall according to any one of claims 1 to 8,
**characterised in**
**that** the supporting frame (1) is formed from a plurality of vertically running frame profiles (2) arranged at a distance from one another, running horizontally on floor and ceiling and inbetween, wherein the frame profiles (2) are preferably formed from zinc-plated sheets having a C-shaped cross-section.

10. The plasterboard stud wall according to any one of claims 1 to 9,
**characterised in**
**that** the solid wall element (5) is optionally configured as an inspection opening.

## Revendications

1. Cloison à ossature en plâtre cartonné, comprenant un cadre porteur (1) constitué de profils de cadre (2) et recouvert au moins d'un côté de plaques en plâtre cartonné (3), les plaques en plâtre cartonné (3) délimitant une région d'ouverture (4),
**caractérisée en ce que**
dans la région d'ouverture (4) est disposé un élément de cloison massif (5) en forme de cloison, constitué de béton-gaz ou de béton cellulaire, pour le passage de câbles et de tubes, sur lequel peuvent être prévues et intégrées ultérieurement des ouvertures de passage (6) pour les câbles et les tubes à faire passer à travers.

2. Cloison à ossature en plâtre cartonné selon la revendication 1,
**caractérisée en ce que**
dans chaque ouverture de passage (6) se trouve un matériau intumescent en cas d'incendie, de préférence du graphite expansé, l'élément de cloison massif (5) formant de préférence une surface plane avec les plaques de plâtre cartonné (3) du côté visible.

3. Cloison à ossature en plâtre cartonné selon la revendication 1,
**caractérisée en ce que**
lors du montage sur place, l'élément de cloison massif (5) est tout d'abord formé comme un corps plein sans ouverture de passage, un matériau intumescent en cas d'incendie étant de préférence disposé dans chaque ouverture de passage (6), de préférence du graphite expansé, l'élément de cloison massif (5) formant de préférence une surface plane avec les plaques de plâtre cartonné (3) du côté visible.

4. Cloison à ossature en plâtre cartonné selon l'une des revendications 1 à 3,
**caractérisée en ce que**
l'élément de cloison massif (5) est conçu en plusieurs parties, de préférence en deux parties, les ouvertures de passage (6) étant de préférence disposées dans une zone de liaison (12) entre deux parties de l'élément de cloison massif (5).

5. Cloison à ossature en plâtre cartonné selon l'une des revendications 1 à 4,
**caractérisée en ce que**
entre l'élément de cloison massif (5) et les plaques de plâtre cartonné (3) est disposé un matériau intumescent en cas d'incendie, de préférence du graphite expansé (10), et/ou un matériau d'étanchéité, de préférence du plâtre (11) ou du silicone.

6. Cloison à ossature en plâtre cartonné selon l'une des revendications 1 à 5,
**caractérisée en ce que**
l'élément de cloison massif (5) présente une épaisseur d'environ 75 à 200 mm, avec de préférence un espace d'au moins 50 à 100 mm environ entre l'ouverture de passage (6) et le bord de l'élément de cloison massif (5), les ouvertures de passage (6) présentant de préférence des diamètres différents pour des câbles et des tubes de différentes grosseurs, l'élément de cloison massif (5) étant de préférence fixé aux profils de cadre (2).

7. Cloison à ossature en plâtre cartonné selon l'une des revendications 1 à 6,
**caractérisée en ce que**
l'élément de cloison massif (5) est fixé aux plaques de plâtre cartonné (3), au moins un élément de fixation (7), de préférence une tôle plate, étant de préférence prévu sur l'élément de cloison massif (5), en étant fixé au moyen de vis (8) à un clip (9) entourant le bord des plaques de plâtre cartonné.

8. Cloison à ossature en plâtre cartonné selon l'une des revendications 1 à 7,
**caractérisée en ce que**
plusieurs couches, de préférence deux couches, de plaques de plâtre cartonné (3) sont disposées de façon à se chevaucher entre elles sur le cadre porteur (1).

9. Cloison à ossature en plâtre cartonné selon l'une des revendications 1 à 8,
**caractérisée en ce que**
le cadre porteur (1) est constitué de profils de cadre (2) disposés horizontalement au fond et au plafond et de plusieurs autres disposés verticalement entre les deux, de façon à être espacés entre eux, les profils de cadre (2) étant formés de tôles galvanisées avec une section transversale en C.

10. Cloison à ossature selon l'une des revendications 1 à 9,
**caractérisée en ce que**
l'élément de cloison massif (5) est conçu au choix comme une ouverture de révision.
